# FASCICULE DE BREVET EUROPEEN

(11) **EP 0 424 233 B1**
(45) Date de publication et mention de la délivrance du brevet: **01.06.1994**
(21) Numéro de dépôt: 90402880.0
(22) Date de dépôt: 16.10.1990
(51) Int. Cl.: B60B 33/02

(54) **Dispositif à roulette pivotante**
Laufrolle
Castor

(30) Priorité: 17.10.1989 FR 8913580
(43) Date de publication de la demande: 24.04.1991
(73) Titulaire: GUITEL-ETIENNE MOBILOR Société Anonyme, F-93310 Le Pré Saint-Gervais (FR)
(72) Inventeur: Roy, Jean-Pierre, F-93700 Drancy (FR); Hrabina, Jean, F-93600 Aulnay-sous-Bois (FR); Bertrand, Claude G., F-93600 Aulnay-sous-Bois (FR)
(74) Mandataire: Hasenrader, Hubert

(56) Documents cités:
- EP-A- 0 370 716
- DE-A- 3 226 926
- DE-C- 1 229 855
- DE-U- 8 510 870
- US-A- 2 799 514

## Description

La présente invention concerne un dispositif à roulette pivotante pour chariot ou autre engin mobile, du type comportant une roue dont le pivotement autour d'un axe vertical est susceptible d'être bloqué, ou débloqué par la rotation de celle-ci dans un sens ou dans l'autre, un palier de support présentant au moins une cuvette annulaire qui est ouverte vers le bas et qui, par sa partie centrale, est fixée rigidement sur l'extrémité inférieure de l'axe vertical de pivotement, une chape de support présentant au moins deux joues latérales dont les extrémités inférieures portent l'axe horizontal de la roue ainsi qu'une calotte annulaire supérieure raccordée aux extrémités supérieures des joues latérales, coopérant avec les organes de roulement du palier et disposée autour de l'extrémité inférieure de l'axe vertical de façon à pouvoir tourner autour de ce dernier, et comportant également des moyens de verrouillage de la chape par rapport à l'axe vertical de pivotement, ces moyens présentant un double levier de commande qui possède un bras de levier supérieur et un bras de levier inférieur, est disposé essentiellement à l'intérieur de la chape et est articulé sur les joues latérales de celle-ci, à l'aide d'un axe horizontal prévu entre la périphérie de la roue et le palier de support, un organe de frottement appliqué contre une partie de la roue et susceptible de provoquer le pivotement du double levier vers l'une de ses deux positions extrêmes dans l'une desquelles la chape de support est immobilisée en rotation par rapport à l'axe vertical et dans l'autre desquelles ladite chape est libre en rotation par rapport audit axe vertical, un premier organe de verrouillage solidaire de l'extrémité libre du bras de levier supérieur et un deuxième organe de verrouillage prévu sur un élément immobile en rotation et susceptible de coopérer avec ledit premier organe en vue d'immobiliser la chape de support sur son axe vertical, ainsi que deux butées de fin de course, dont au moins une est prévue sur la chape et qui servent à limiter l'angle de pivotement du double levier entre ses deux positions extrêmes.

Un tel dispositif à roulette pivotante est par exemple connue par le brevet britannique GB-A-2 106 378, qui montre les caractéristiques du préambule de la revendication 1. Dans ce cas, une partie des moyens de verrouillage de la chape sont facilement accessibles de l'extérieur, et peuvent être endommagés de sorte que leur fonctionnement correct n'est pas assuré en permanence.

En outre, la roulette connue nécessite une modification importante de la chape, notamment à l'endroit de l'axe de la roue, axe qui doit pouvoir se déplacer dans des trous oblongs ménagés dans ladite chape.

Un autre inconvénient de la roulette pivotante connue réside dans le fait que la commande de déverrouillage de la chape doit s'accompagner d'un arrêt momentané brusque de la roue. Par ailleurs, les moyens de verrouillage du dispositif connu à roulette pivotante comportent un grand nombre de pièces individuelles non protégées et donc sujettes à une détérioration rapide.

L'objet de la présente invention est de supprimer ces inconvénients et de proposer un dispositif à roulette pivotante qui soit d'une conception simple, protégé contre les endommagements extérieurs, et comportant un nombre réduit de pièces individuelles.

Dans le cadre d'un dispositif à roulette pivotante du type mentionné ci-dessus, ce but est atteint conformément à l'invention du fait que
- le double levier est réalisé sous forme d'un levier coudé dont les deux bras incluent un angle compris entre 90 et 160°, le bras inférieur oscillant entre deux positions extrêmes situées à proximité d'un plan radial passant par l'axe de pivotement dudit levier et l'axe de rotation de la roue,
- le bras de levier inférieur s'étend vers le bas dans l'espace situé au-dessus de l'axe horizontal de la roue et compris entre une face latérale (bandage ou jante) de ladite roue et la joue voisine de la chape, et porte, à son extrémité inférieure, l'organe de frottement réalisé en forme de patin et appliqué élastiquement contre ladite face latérale de la roue sous l'action dudit bras de levier inférieur,
- le bras de levier supérieur est au moins partiellement logé dans l'espace délimité par la chape de support au-dessus de la bande de roulement de la roue et comporte, en tant que premier organe de verrouillage, une plaquette s'étendant perpendiculairement à l'axe de pivotement du levier, en direction de la périphérie du palier de support,
- le deuxième organe de verrouillage est constitué par une échancrure de verrouillage ouverte vers le bas, susceptible de recevoir sans jeu latéral notable la plaquette de verrouillage, et ménagée dans l'extrémité inférieure de l'axe vertical de pivotement ou d'un élément solidaire de ce dernier,
- l'une des deux butées de fin de course du double levier est disposée dans l'espace situé au-dessus de la roue et entre les joues latérales de la chape et coopère avec une première partie du double levier et la deuxième butée est constituée, soit par le fond de l'échancrure de verrouillage, soit par le bord inférieur de l'élément comportant ladite échancrure de verrouillage et coopère avec la plaquette de verrouillage du bras de levier supérieur, et
- la calotte annulaire de la chape de support comprend, de part et d'autre du plan médian de ladite chape, perpendiculaire à l'axe de la roue et à l'axe de pivotement du double levier, un évidement de guidage ouvert vers le bas et destiné à guider,sans jeu latéral notable une partie du bras de levier supérieur ou de la plaquette de verrouillage sur tout son parcours entre ses deux positions extrêmes.

Grâce à cette disposition, les moyens de verrouillage sont parfaitement protégés, comportent un nombre réduit de pièces individuelles, et sont en permanence opérationnels, et ceci malgré une usure possible de la bande de roulement de la roue.

L'objet de la présente invention sera encore mieux comprise à l'aide de la description suivante d'un mode de réalisation du dispositif à roulettepivotante et de quelques variantes, description faite en référence aux dessins annexés sur lesquels :
- la figure 1 est une vue en élévation d'une coupe verticale à travers un dispositif à roulette pivotante et son palier de support, ledit dispositif comportant un premier mode de réalisation des moyens de verrouillage,
- la figure 2 est une vue en élévation d'une coupe verticale à travers un dispositif à roulette pivotante et son palier de support, ce dispositif étant associé à un deuxième mode de réalisation des moyens de verrouillage,
- la figure 3 montre en perspective un détail des moyens de verrouillage,
- la figure 4 est une vue en perspective et en présentation éclatée de plusieurs éléments faisant partie des moyens de verrouillage de la roue pivotante,
- la figure 5 est une vue en élévation à travers un dispositif à roulette pivotante muni d'un autre mode de réalisation du palier de support et des moyens de verrouillage correspondants, et
- la figure 6 est une vue en élévation d'une coupe verticale du dispositif à roulette pivotante comportant encore une autre variante des moyens de verrouillage.

Tel que représenté sur les dessins annexés, le dispositif à roulette pivotante 1 associé à un chariot ou autre plateforme mobile non représentée comporte une roue 2 qui est susceptible de pouvoir pivoter autour d'un axe vertical de pivotement 3 et d'être bloqué ou débloqué par la rotation de ladite roue 2 dans un sens ou dans l'autre. La roue 2 comporte un axe de rotation horizontal 4 dont les extrémités sont portées par au moins deux joues latérales ou fourches 5 d'une chape de support 6 dont l'extrémité supérieure ayant la forme d'une calotte annulaire 7 est montée par l'intermédiaire d'un palier de support 8 sur l'extrémité inférieure de l'axe vertical de pivotement 3. On remarquera que l'axe vertical de pivotement est latéralement décalé par rapport au plan vertical passant par l'axe horizontal 4 de la roue 2.

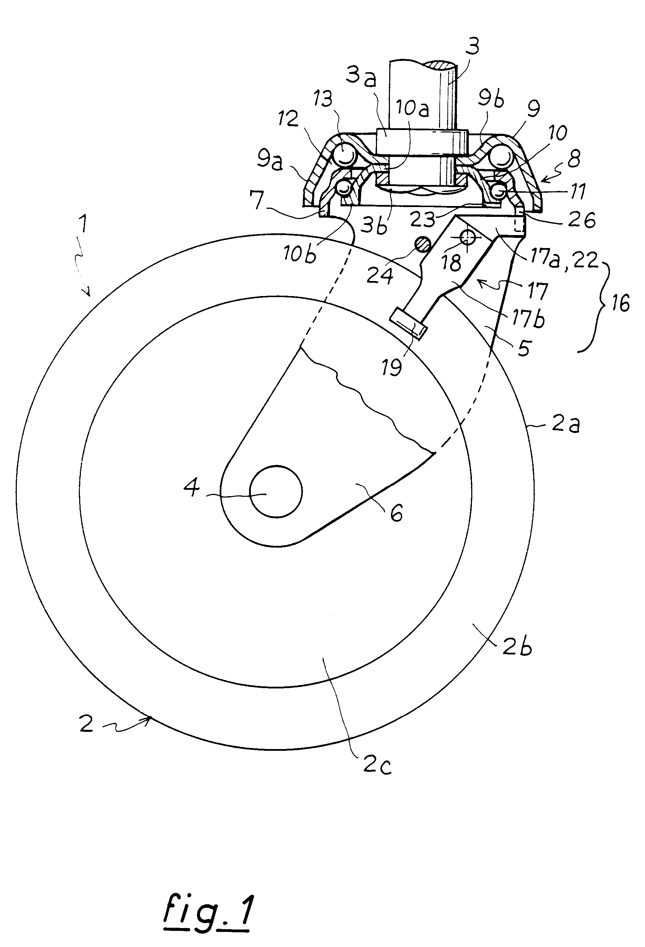

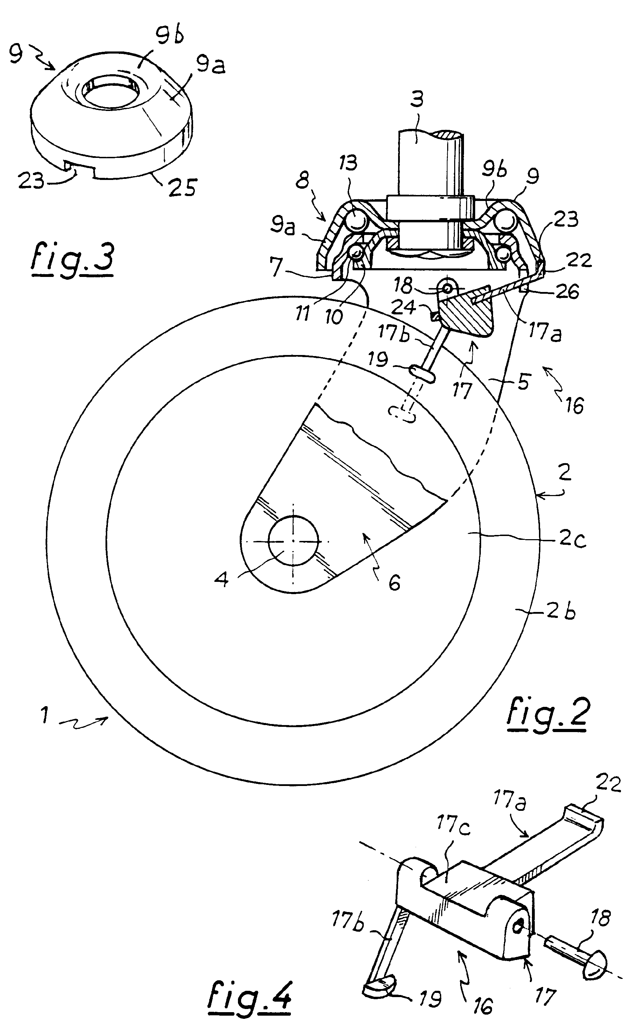

Comme on peut le voir sur les figures 1 et 2, le palier de support 8 comprend une première cuvette annulaire 9 et une deuxième cuvette annulaire 10 fixée, comme la première, rigidement sur l'extrémité inférieure de l'axe vertical 3. Les deux cuvettes 9 et 10 sont ouvertes vers le bas. La première cuvette 9 est disposée au-dessus de la deuxième cuvette 10 et présente une jupe extérieure en forme de cloche 9a, à laquelle se raccorde à la partie supérieure, un fond annulaire retourné vers le bas 9b qui dans la zone d'ouverture intérieure repose sur le fond annulaire 10a de la cuvette inférieure 10. Les deux cuvettes 9, 10 sont fixées sur l'axe vertical 3 et sont enserrées par leurs bords intérieurs entre deux épaulements annulaires 3a, 3b de l'axe vertical 3. A son extrémité inférieure, cette cuvette inférieure 10 possède un bord annulaire 10b qui, par sa face supérieure, sert de piste de roulement à une première série de billes de roulement ou organes analogues 11 sur laquelle prend appui la calotte annulaire 7 de la chape de support 6. Dans la zone de jonction annulaire entre la cloche 9a et le fond annulaire 9b, la cuvette supérieure 9 délimite une piste de roulement en forme de gorge 12 dans laquelle est logée une deuxième série de billes de roulement 13 reposant sur la face supérieure de la calotte annulaire 7.

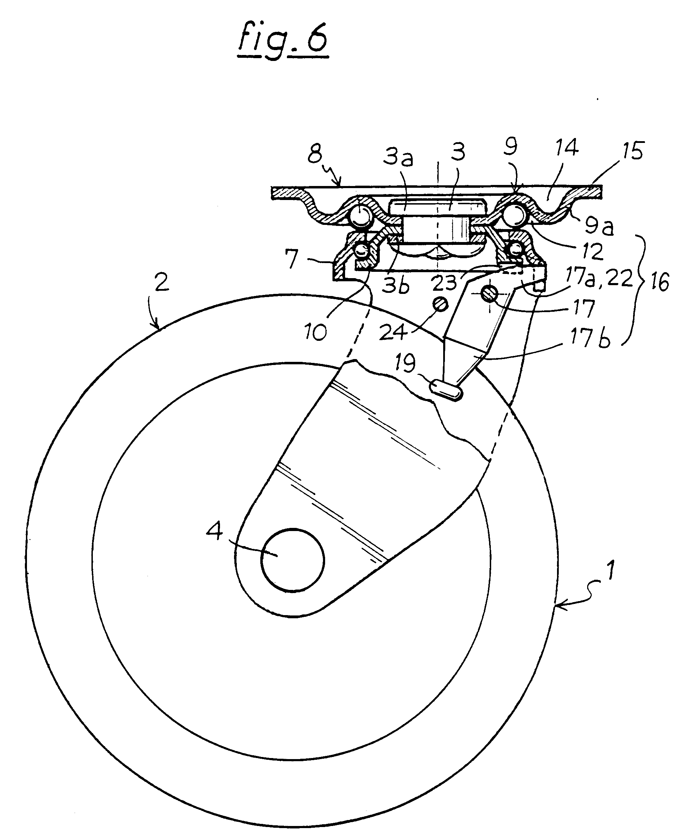

Telle que représentée sur les figures 1, 2 et 5, la cuvette extérieure 9 recouvre et entoure, notamment par son bord inférieur, la calotte annulaire 7 et la cuvette inférieure 10 qui est également entourée par ladite calotte 7. Il est cependant possible d'utiliser une cuvette supérieure 9 dont la jupe 9a est recourbée vers le haut à partir du bord extérieur de la gorge 12 ouverte vers le bas, de façon à présenter une gorge annulaire extérieure 14 adjacente à la gorge 12, ouverte vers le haut, d'une profondeur légèrement supérieure à celle de la gorge 12 et se terminant par un épaulement horizontal 15 légèrement surélevé et servant par exemple à la fixation du palier 8 sur l'embase d'un chariot non représenté (voir figure 6).

Le dispositif à roulette pivotante 1 comporte également des moyens de verrouillage 16 de la chape de support 6. Ces moyens de verrouillage 16 comprennent un pivoteur 17 réalisé sous la forme d'un double levier coudé présentant un bras de levier supérieur 17a et un bras de levier inférieur 17b délimitant avec ce dernier un angle compris entre 90° et 160°. La partie supérieure de ce double levier coudé 17 est logé dans l'espace compris entre le palier de support 8, et, plus précisément dit, dans les exemples représentés sur les figures 1, 2 et 5 entre la cuvette supérieure ou extérieure 9 dudit palier 8 et la bande de roulement 2a de la roue 2, et entre les joues latérales 5 de la chape 6. La partie de jonction entre les deux bras de levier 17a, 17b est articulée sur les joues latérales ou fourches 5 de la chape 6 à l'aide d'un seul axe horizontal ou de deux pivots coaxiaux 18 rivetés sur lesdites joues 5. Les moyens de verrouillage 16 comprennent, en outre, un organe de frottement 19 réalisé sous forme d'un patin prévu à l'extrémité inférieure du bras de levier inférieur 17b et appliqué en permanence et élastiquement contre la bande de roulement 2a de la roue 2. Comme on peut le voir sur le dessin, le bras de levier inférieur 17b s'étend vers le bas dans l'espace situé au-dessus de l'axe 4 de la roue 2 et compris entre, d'une part, la face latérale de celle-ci au niveau du bandage 2b ou de la jante 2c de la roue 2 et, d'autre part, la joue voisine 5 de la chape 6. Le bras de levier inférieur 17b est constitué en tant que ou comprend un ressort à lame qui sollicite en permanence le patin de frottement 19 contre la face latérale du bandage 2b ou de la jante 2c de la roue 2. Comme on peut le voir plus particulièrement sur la figure 4, le bras de levier inférieur ou ressort à lame 17b est fixé sur le corps central 17c du double levier 17 de façon latéralement décalée par rapport au bras de levier supérieur 17a et s'étend en direction de l'axe horizontal 4 de la roue 2. Ce patin de frottement 19 est susceptible de provoquer le pivotement du double levier 17 vers l'une de ses deux positions extrêmes dans l'une desquelles la chape de support 6 est immobilisée par rapport à l'axe vertical 3 et dans l'autre desquelles ladite chape 6 est libre en rotation par rapport audit axe vertical 3.

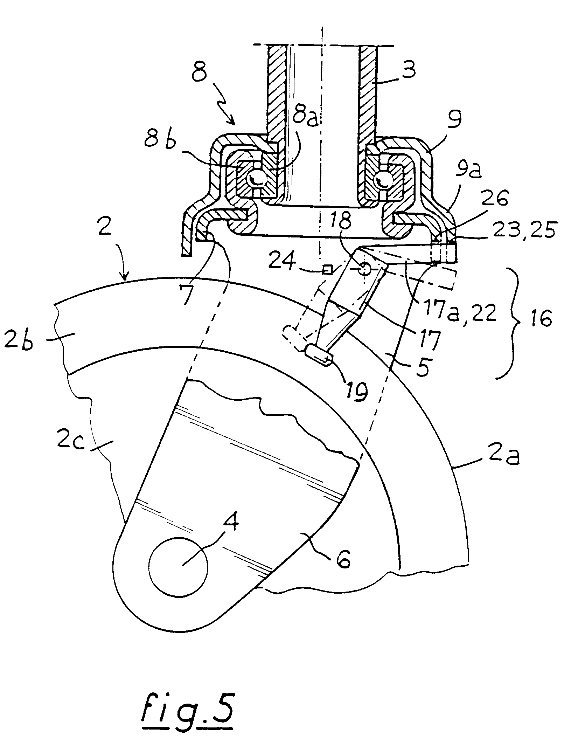

Les moyens de verrouillage 16 comprennent également un premier organe de verrouillage 22 constitué par une plaquette solidaire de l'extrémité libre du bras de levier supérieur 17a ou formant au moins une partie importante de ce dernier et s'étendant perpendiculairement à l'axe de pivotement 18 du levier 17 en direction de la périphérie du palier de support (8). Ces moyens de verrouillage 16 comportent, en outre, un deuxième organe de verrouillage 23 qui est prévu sur un élément immobile en rotation tel que l'axe vertical 3 ou un organe solidaire de ce dernier, par exemple la cuvette fixe extérieure 9 du palier 8 (figures 2 et 5) ou l'une ou l'autre des deux cuvettes fixes 9, 10 dudit palier de support 8 (figures 1, 2 et 6). Ce deuxième organe de verrouillage 23 est susceptible de coopérer avec le premier organe de verrouillage 22 en vue d'immobiliser la chape de support 6 sur son axe vertical de pivotement 3. Le deuxième organe de verrouillage est constitué par une échancrure de verrouillage 23 ouverte vers le bas en direction du premier organe de verrouillage 22 et susceptible de recevoir sans jeu latéral notable le premier organe de verrouillage, c'est-à-dire la plaquette de verrouillage 22 solidaire du bras de levier supérieur 17a ou constituant ce dernier. Cette échancrure 23 est ménagée dans l'extrémité inférieure de l'axe vertical de pivotement 3 ou d'un élément (cuvette extérieure 9 ou cuvette inférieure et intérieure 10 du palier de support 8) solidaire de ce dernier, de part et d'autre d'un plan médian vertical (ici plan de coupe des figures 1, 2, 5 et 6) de la chape 6, ce plan passant aussi par l'axe de l'axe vertical 3 et étant supposé être perpendiculaire à l'axe horizontal de la roue 2 et à l'axe horizontal de pivotement 18 du double levier 17 lorsque le chariot auquel est fixée la roulette pivotante 1 avance tout droit. En outre l'axe de pivotement 18 du levier 17 est situé du côté de la chape 6 où la distance verticale entre la plaquette de verrouillage 22 et la bande de roulement 2a de la roue 2 est la plus grande.

On notera enfin que les moyens de verrouillage 16 comprennent deux butées de fin de course 24, 25 qui servent à limiter l'angle de pivotement du double levier 17 entre ses deux positions extrêmes qui incluent avec l'axe de pivotement 18 un angle relativement faible de l'ordre de 3 à 15° et sont situées à proximité d'un plan radial de la roue 2, plan passant par l'axe de pivotement du levier 17 et l'axe de rotation de la roue 2. Ainsi, le bras de levier inférieur 17b ne s'écartera pas trop d'une position dans laquelle son axe s'étend verticalement par rapport à la bande de roulement 2a. Comme on peut le voir sur le dessin, l'axe de pivotement 18 du double levier 17 est situé près de la périphérie de la calotte sphérique 7 de la chape 6 et également près de l'échancrure de verrouillage 23. La première butée de fin de course 24 du double levier 17 est disposée dans l'espace situé au-dessus de la roue 2 et entre les joues latérales 5 de la chape 6 et coopère avec une première partie, par exemple le bras de levier inférieur 17b du double levier 17, tandis que la deuxième butée est constituée soit par le fond de l'échancrure de verrouillage 23, soit par le bord inférieur de l'élément (cuvette 9 ou 10) comportant ladite échancrure 23, et coopère avec la plaquette de verrouillage 22 pour limiter le pivotement du levier 17 (dans le sens contraire des aiguilles d'une montre eu égard au dessin annexé).

La calotte annulaire 7 de la chape de support 6 comprend de part et d'autre du plan vertical médian de la chape 6, plan perpendiculaire à l'axe de la roue 2 et à l'axe de pivotement 18 du double levier 17, un évidement de guidage 26 qui est situé du côté de la chape 6 où la distance entre la calotte 7 et la bande de roulement 2a est la plus grande, qui est ouvert vers le bas et qui est destiné à guider sans jeu latéral notable une partie du bras de levier supérieur 17a ou de la plaquette de verrouillage sur ses courses de pivotement entre les positions extrêmes du double levier 17. Grâce à cette disposition, le verrouillage de la chape 6 est transmis à l'axe de pivotement 3 sur la distance la plus courte entre la chape pivotante 6 et un élément (cuvette 9 ou 10) solidaire dudit axe vertical de pivotement 3.

On remarquera que l'échancrure de verrouillage 23 peut être prévue radialement à l'extérieur de l'évidement de guidage 26 de la calotte 7 (voir échancrure 23 sur la cuvette extérieure 9, figures 4 et 5) ou à l'intérieur dudit évidement 26 (voir échancrure 23 sur la cuvette intérieure 10, figures 1 et 6).

Comme on peut le voir sur la figure 5, le palier de support 8 comporte deux anneaux de roulement 8a, 8b dont le deuxième anneau 8b de roulement entoure le premier anneau 8a et est solidaire de la calotte annulaire 7 de la chape de support 6, le premier anneau 8a étant solidaire de l'axe vertical 3 et de la cuvette extérieure 9.

## Revendications

1. Dispositif à roulette pivotante (1) comportant une roue (2) dont le pivotement autour d'un axe vertical (3) est susceptible d'être bloqué ou débloqué par la rotation de celle-ci (2) dans un sens ou dans l'autre, un palier de support (8) présentant au moins une cuvette annulaire (9, 10) qui est ouverte vers le bas et qui, par sa partie centrale, est fixée rigidement sur l'extrémité inférieure de l'axe de pivotement (3), une chape de support (6) présentant au moins deux joues latérales (5) dont les extrémités inférieures portent l'axe horizontal (4) de la roue (2) ainsi qu'une calotte annulaire supérieure (7) raccordée aux extrémités supérieures des joues latérales (5), coopérant avec les organes de roulement du palier (8) et disposée autour de l'extrémité inférieure de l'axe vertical (3) de façon à pouvoir tourner autour de ce dernier, et comportant également des moyens de verrouillage (16) de la chape (6) par rapport à l'axe vertical de pivotement (3), ces moyens (16) présentant un double levier de commande (17) qui possède un bras de levier supérieur (17a) et un bras de levier inférieur (17b), est disposé à l'intérieur de la chape (6) et est articulé sur les joues latérales (5) de celle-ci à l'aide d'un axe horizontal (18) prévu entre la périphérie de ladite roue (2) et le palier de support (8), un organe de frottement (19) appliqué contre une partie de la roue (2) et susceptible de provoquer le pivotement du double levier (17) vers l'une de ses deux positions extrêmes dans l'une desquelles la chape de support (6) est immobilisée en rotation par rapport à l'axe vertical (3) et dans l'autre desquelles ladite chape (6) est libre en rotation par rapport audit axe vertical (3), un premier organe de verrouillage (22) solidaire de l'extrémité libre du bras de levier supérieur (17a) et un deuxième organe de verrouillage (23) prévu sur un élément (9, 10) immobile en rotation du palier de support (8) et susceptible de coopérer avec ledit premier organe (22) en vue de verrouiller la chape de support (6) sur son axe vertical (3), ainsi que deux butées de fin de course (24, 25) dont au moins une est prévue sur la chape (6) et qui servent à limiter l'angle de pivotement du double levier (17) entre ses deux positions extrêmes,
caractérisée en ce
que le double levier (17) est un levier coudé dont les deux bras (17a, 17b) incluent un angle compris entre 90 et 160°,
que le bras de levier inférieur (17b) s'étend vers le bas dans l'espace situé au-dessus de l'axe (4) de la roue (2) et compris entre une face latérale (bandage ou jante 2c) de ladite roue (2) et la joue voisine (5) de la chape (6), et porte, à son extrémité inférieure, l'organe de frottement (19) réalisé en forme de patin et appliqué élastiquement contre ladite face latérale (2b, 2c) de la roue (2) sous l'action dudit bras de levier inférieur (17b),
que le bras de levier supérieur (17a) est au moins partiellement logé dans l'espace délimité par la chape de support (6) au-dessus de la bande de roulement (2a) de la roue (2) et comporte, en tant que premier organe de verrouillage,une plaquette (22) s'étendant perpendiculairement à l'axe de pivotement (18) du levier (17), en direction de la périphérie du palier de support (8),
que le deuxième organe de verrouillage (23) est constitué par une échancrure de verrouillage ouverte vers le bas, susceptible de recevoir sans jeu latéral notable la plaquette de verrouillage (22), et ménagée dans l'extrémité inférieure de l'axe vertical de pivotement (3) ou d'un élément (9, 10) solidaire de ce dernier,
que l'une (24) des deux butées de fin de course (24, 25) du double levier (17) est disposée dans l'espace situé au-dessus de la roue (2) et entre les joues latérales (5) de la chape (6) et coopère avec une première partie du double levier (17) et la deuxième butée (25) est constituée, soit par le fond de l'échancrure de verrouillage (23), soit par le bord inférieur de l'élément (9, 10) comportant ladite échancrure de verrouillage (23) et coopère avec la plaquette de verrouillage (22) du bras de levier supérieur (17a),
et que la calotte annulaire (7) de la chape de support (6) comprend de part et d'autre du plan médian de ladite chape, perpendiculaire à l'axe (4) de la roue (2) et à l'axe de pivotement (18) du double levier (17), un évidement de guidage (26) ouvert vers le bas et destiné à guider sans jeu latéral notable une partie du bras de levier supérieur (17a) ou de la plaquette de verrouillage (22) sur tout son parcours entre ses deux positions extrêmes.

2. Roulette pivotante selon la revendication 1, caractérisée en ce que la cuvette (9) du palier de support (8) comprend une jupe en forme de cloche (9a) dont le bord inférieur recouvre et entoure l'extrémité supérieure (7) de la chape de support (6).

3. Roulette pivotante selon l'une des revendications 1 et 2, caractérisée en ce que le bras de levier inférieur (17b) comporte un ressort à lame qui sollicite en permanence le patin (19) de frottement contre la face latérale du bandage (2b) ou de la jante (2c) de la roue (2).

4. Roulette pivotante selon la revendication 3, caractérisée en ce que le ressort à lame du bras de levier inférieur (17b) est fixé latéralement décalé par rapport à la plaquette de verrouillage (22) sur une des extrémités latérales du corps central du double levier (17) et s'étend en direction de l'axe horizontal (4) de la roue (2).

5. Roulette pivotante selon la revendication 1, caractérisée en ce que le palier de support (8) présente également une cuvette annulaire inférieure (10) ouverte vers le bas et disposé à l'intérieur et en dessous de la première cuvette supérieure et extérieure (9) et solidaire de l'extrémité inférieure de l'axe vertical de pivotement (3), et que la calotte annulaire (7) de la chape (6) est disposée entre deux séries horizontales de roulement (11, 13) de façon à pouvoir tourner autour de l'axe vertical de pivotement (3).

6. Roulette pivotante selon la revendication 1, caractérisée en ce que le palier de support (8) comporte deux anneaux de roulement (8a, 8b) dont le deuxième anneau (8b) de roulement entoure le premier anneau (8a) et est solidaire de la calotte annulaire (7) de la chape de support (6), le premier anneau (8a) étant solidaire de l'axe vertical (3) et de la cuvette extérieure (9).

7. Roulette pivotante selon l'une des revendications 1 à 6, caractérisée en ce que l'échancrure de verrouillage (23) est ménagée dans le bord inférieur de la cuvette inférieure (10) du palier de support (8) et que l'extrémité libre de la plaquette de verrouillage (22) portée par le bras de levier supérieur (17a) est située essentiellement à l'intérieur de la zone se trouvant à l'aplomb du pourtour de la calotte annulaire (7) de la chape (6).

8. Roulette pivotante selon l'une des revendications 1 à 6, caractérisée en ce que l'échancrure de verrouillage (23) est ménagée dans le bord inférieur de la cuvette supérieure et extérieure (9) du palier de support (8) et que l'extrémité libre de la plaquette de verrouillage (23) portée par le bras de levier supérieur (17a) est située sensiblement à l'intérieur de la zone se trouvant à l'aplomb du pourtour de la cuvette supérieure (9) du palier de support (8).

9. Roulette pivotante selon la revendication 1, caractérisée en ce que la première butée de fin de course (24) est constituée par une tige transversale disposée parallèlement à l'axe de pivotement (18) du double levier (17) entre les joues (5) de la chape (6) et fixée sur celles-ci, et susceptibles de coopérer avec le bras de levier inférieur (17b).

## Patentansprüche

1. Lenkrollenvorrichtung (1), umfassend ein Rad (2), dessen Schwenkbewegung um eine vertikale Achse (3) durch Drehung desselben (2) in die eine oder die andere Richtung verriegelt oder entriegelt werden kann, ein Traglager (8) mit mindestens einer nach unten offenen Ringtasse (9, 10), die mit ihrem Mittelteil am unteren Ende der Schwenkachse (3) starr befestigt ist, eine Traggabel (6) mit mindestens zwei Seitenbacken (5), deren untere Enden die horizontale Achse (4) des Rades (2) tragen, sowie einer oberen Ringkappe (7), die mit den oberen Enden der Seitenbacken (5) verbunden ist, mit den Wälzorganen des Lagers (8) zusammenwirkt und um das untere Ende der vertikalen Achse (3) herum drehbar um letztere angeordnet ist, und weiters umfassend Einrichtungen (16) zur Verriegelung der Gabel (6) in bezug auf die vertikale Schwenkachse (3), welche Einrichtungen (16) einen Doppelsteuerhebel (17) aufweisen, der einen oberen Hebelarm (17a) und einen unteren Hebelarm (17b) besitzt, innerhalb der Gabel (6) angeordnet ist und an den Seitenbacken (5) derselben mittels einer zwischen dem Umfang des Rades (2) und dem Traglager (8) vorgesehenen horizontalen Achse (18) angelenkt ist, ein Reiborgan (19), das an einen Teil des Rades (2) angedrückt ist und die Schwenkung des Doppelhebels (17) in Richtung einer seiner beiden Endpositionen bewirken kann, in deren einer die Traggabel (6) in bezug auf die vertikale Achse (3) in der Drehung immobilisiert wird und in deren anderer die Gabel (6) in bezug auf die vertikale Achse (3) frei drehbar ist, ein erstes Verriegelungsorgan (22), das mit dem freien Ende des oberen Hebelarms (17a) fest verbunden ist, und ein zweites Verriegelungsorgan (23), das auf einem drehfesten Element (9, 10) des Traglagers (8) vorgesehen ist und mit dem ersten Organ (22) zwecks Verriegelung der Traggabel (6) um ihre vertikale Achse (3) zusammenwirken kann, sowie zwei Endanschläge (24, 25), von denen zumindest einer auf der Gabel (6) vorgesehen ist und die zur Begrenzung des Schwenkwinkels des Doppelhebels (17) zwischen seinen zwei Endpositionen dienen,
dadurch gekennzeichnet,
daß der Doppelhebel (17) ein Kniehebel ist, dessen beide Arme (17a, 17b) einen Winkel zwischen 90 und 160° einschließen, daß sich der untere Hebelarm (17b) nach unten in den über der Achse (4) des Rades (2) befindlichen und zwischen einer Seitenfläche (Reifen oder Felge 2c) des Rades (2) und der benachbarten Backe (5) der Gabel (6) eingeschlossenen Raum erstreckt und an seinem unteren Ende das Reiborgan (19) trägt, welches in Form einer Kufe ausgebildet und unter der Wirkung des unteren Hebelarms (17b) elastisch an die Seitenfläche (2b, 2c) des Rades (2) gedrückt ist,
daß der obere Hebelarm (17a) zumindest teilweise in dem von der Traggabel (6) oberhalb der Lauffläche (2a) des Rades (2) begrenzten Raum angeordnet ist und als erstes Verriegelungsorgan eine Raste (22) aufweist, welche sich senkrecht zur Schwenkachse (18) des Hebels (17) in Umfangsrichtung des Traglagers (8) erstreckt,
daß das zweite Verriegelungsorgan (23) durch eine nach unten offene Verriegelungsaussparung gebildet ist, die ohne merkliches seitliches Spiel die Verriegelungsraste (22) aufnehmen kann und im unteren Ende der vertikalen Schwenkachse (3) oder eines mit dieser fest verbundenen Elements (9, 10) vorgesehen ist,
daß einer (24) der beiden Endanschläge (24, 25) des Doppelhebels (17) in dem oberhalb des Rades (2) und zwischen den Seitenbacken (5) der Gabel (6) befindlichen Raum angeordnet ist und mit einem ersten Teil des Doppelhebels (17) zusammenwirkt und der zweite Endanschlag (25) entweder duch den Boden der Verriegelungsaussparung (23) oder durch den unteren Rand des die Verriegelungsaussparung (23) aufweisenden Elements (9, 10) gebildet ist und mit der Verriegelungsraste (22) des oberen Hebelarms (17a) zusammenwirkt,
und daß die Ringkappe (7) der Traggabel (6) beiderseits der Mittelebene der Gabel senkrecht zur Achse (4) des Rades (2) und zur Schwenkachse (18) des Doppelhebels (17) eine nach unten offene Führungsausnehmung (26) aufweist, die dazu bestimmt ist, ohne merkliches seitliches Spiel einen Teil des oberen Hebelarms (17a) oder der Verriegelungsraste (22) über die gesamte Wegstrecke zwischen seinen beiden Endpositionen zu führen.

2. Lenkrolle nach Anspruch 1, dadurch gekennzeichnet, daß die Tasse (9) des Traglagers (8) einen glockenförmigen Mantel (9a) aufweist, dessen unterer Rand das obere Ende (7) der Traggabel (6) bedeckt und umgibt.

3. Lenkrolle nach einem der Ansprüche 1 und 2, dadurch gekennzeichnet, daß der untere Hebelarm (17b) eine Blattfeder aufweist, die die Reibkufe (19) ständig gegen die Seitenfläche des Reifens (2b) oder der Felge (2c) des Rades (2) spannt.

4. Lenkrolle nach Anspruch 3, dadurch gekennzeichnet, daß die Blattfeder des unteren Hebelarms (17b) in bezug auf die Verriegelungsraste (22) an einem der seitlichen Enden des Mittelkörpers des Doppelhebels (17) seitlich versetzt angebracht ist und sich in Richtung zur horizontalen Achse (4) des Rades (2) erstreckt.

5. Lenkrolle nach Anspruch 1, dadurch gekennzeichnet, daß das Traglager (8) auch eine nach unten offene, untere Ringtasse (10) aufweist, die innerhalb und unterhalb der oberen und äußeren und mit dem unteren Ende der vertikalen Schwenkachse (3) fest verbundenen ersten Tasse (9) angeordnet ist, und daß die Ringkappe (7) der Gabel (6) zwischen zwei horizontalen Rollreihen (11, 13) drehbar um die vertikale Schwenkachse (3) angeordnet ist.

6. Lenkrolle nach Anspruch 1, dadurch gekennzeichnet, daß das Traglager (8) zwei Wälzringe (8a, 8b) aufweist, von denen der zweite Wälzring (8b) den ersten Ring (8a) umgibt und mit der Ringkappe (7) der Traggabel (6) fest verbunden ist, wobei der erste Ring (8a) mit der vertikalen Achse (3) und der äußeren Tasse (9) fest verbunden ist.

7. Lenkrolle nach einem der Ansprüche 1 bis 6, dadurch gekennzeichnet, daß die Verriegelungsaussparung (23) im unteren Rand der unteren Tasse (10) des Traglagers (8) vorgesehen ist, und daß das freie Ende der vom oberen Hebelarm (17a) getragenen Verriegelungsraste (22) im wesentlichen innerhalb der sich lotrecht zum äußeren Umfang der Ringkappe (7) der Gabel (6) befindlichen Zone liegt.

8. Lenkrolle nach einem der Anprüche 1 bis 6, dadurch gekennzeichnet, daß die Verriegelungsaussparung (23) im unteren Rand der oberen und äußeren Tasse (9) des Traglagers (8) vorgesehen ist, und daß das freie Ende der vom oberen Hebelarm (17a) getragenen Verriegelungsraste (23) im wesentlichen innerhalb der sich lotrecht zum äußeren Umfang der oberen Tasse (9) des Traglagers (8) befindlichen Zone liegt.

9. Lenkrolle nach Anspruch 1, dadurch gekennzeichnet, daß der erste Endanschlag (24) durch eine Querstange gebildet ist, die parallel zur Schwenkachse (18) des Doppelhebels (17) zwischen den Backen (5) der Gabel (6) angeordnet und auf diesen befestigt ist und mit dem unteren Hebelarm (17b) zusammenwirken kann.

## Claims

1. Castor (1) comprising a wheel (2), the pivoting motion of which about a vertical axis (3) can be locked or unlocked by the rotation of the wheel (2) in one direction or the other, a support bearing (8) having at least one annular cage (9, 10) which is open towards the bottom and which in its central part is rigidly fixed to the lower end of the pivot axis (3), a support shell (6) having at least two lateral flanges (5), the lower ends of which carry the horizontal axis (4) of the wheel (2) and an upper annular cap (7) connected to the upper ends of the lateral flanges (5), cooperating with the roller elements of the bearing (8) and disposed around the lower end of the vertical axis (3) so that it can rotate about the latter, and also comprising means (16) for locking the shell (6) relative to the vertical pivot axis (3), these means (16) having an articulated control lever (17) which has an upper lever arm (17a) and a lower lever arm (17b), is disposed in the interior of the shell (6) and is hinged on to the lateral flanges (5) of the latter with the aid of a horizontal axis (18) provided between the periphery of the said wheel (2) and the support bearing (8), a friction element (19) which bears against part of the wheel (2) and can pivot the articulated lever (17) towards one of its two end positions, in one of which the support shell (6) is locked in rotation relative to the vertical axis (3) and in the other of which the said shell (6) is free to rotate relative to the said vertical axis (3), a first locking element (22) integral with the free end of the upper lever arm (17a) and a second locking element (23) which is provided on an element (9, 10) of the support bearing (8) locked in rotation and can cooperate with the said first element (22) in order to lock the support shell (6) relative to its vertical axis (3), and two limit stops (24, 25), at least one of which is provided on the shell (6) and which serve to limit the pivoting angle of the articulated lever (17) between its two end positions, characterised in that the articulated lever (17) is an elbow lever, the two arms (17a, 17b) of which include an angle of between 90 and 160°, the lower lever arm (17b) extends towards the bottom in the space situated above the axis (4) of the wheel (2) and included between a lateral face (tyre or rim 2c) of the said wheel (2) and the adjacent flange (5) of the shell (6) and is provided at its lower end with the friction element (19) in the form of a pad and bearing elastically against the said lateral face (2b, 2c) of the wheel (2) under the influence of the said lower lever arm (17b), the upper lever arm (17a) is at least partially housed in the space defined by the support shell (6) above the tread (2a) of the wheel (2) and comprises as a first locking element a plate (22) extending perpendicularly to the pivot axis (18) of the lever (17) in the direction of the periphery of the support bearing (8), the second locking element (23) is formed by a locking notch open towards the bottom which can receive the locking plate (22) without any significant lateral play and is formed in the lower end of the vertical pivot axis (3) or of an element (9, 10) integral with the latter, one (24) of the two limit stops (24, 25) of the articulated lever (17) is disposed in the space situated above the wheel (2) and between the lateral flanges (5) of the shell (6) and cooperates with a first part of the articulated lever (17) and the second stop (25) is formed either by the base of the locking notch (23) or by the lower edge of the element (9, 10) comprising the said locking notch (23) and cooperates with the locking plate (22) of the upper lever arm (17a), and the annular cap (7) of the support shell (6) comprises on either side of the central plane of the said shell, perpendicular to the axis (4) of the wheel (2) and to the pivot axis (18) of the articulated lever (17), a guide recess (26) open towards the bottom and adapted to guide part of the upper lever arm (17a) or of the locking plate (22) without any significant lateral play over its entire course between its two end positions.

2. Castor according to claim 1, characterised in that the cage (9) of the support bearing (8) comprises a bell-shaped skirt (9a), the lower edge of which covers and surrounds the upper end (7) of the support shell (6).

3. Castor according to one of claims 1 and 2, characterised in that the lower lever arm (17b) comprises a leaf spring which constantly urges the friction pad (19) against the lateral face of the tyre (2b) or the rim (2c) of the wheel (2).

4. Castor according to claim 3, characterised in that the leaf spring of the lower lever arm (17b) is fixed, laterally offset relative to the locking plate (22), to one of the lateral ends of the central body of the articulated lever (17) and extends in the direction of the horizontal axis (4) of the wheel (2).

5. Castor according to claim 1, characterised in that the support bearing (8) also has a lower annular cage (10) open towards the bottom and disposed in the interior of and below the first upper outer cage (9) and integral with the lower end of the vertical pivot axis (3), and the annular cap (7) of the shell (6) is disposed between two horizontal rows of roller elements (11, 13), so that it can rotate about the vertical pivot axis (3).

6. Castor according to claim 1, characterised in that the support bearing (8) comprises two roller rings (8a, 8b), the second roller ring (8b) of which surrounds the first ring (8a) and is integral with the annular cap (7) of the support shell (6), the first ring (8a) being integral with the vertical axis (3) and with the outer cage (9).

7. Castor according to one of claims 1 to 6, characterised in that the locking notch (23) is formed in the lower edge of the lower cage (10) of the support bearing (8) and the free end of the locking plate (22) carried by the upper lever arm (17a) is situated substantially in the interior of the zone situated flush with the periphery of the annular cap (7) of the shell (6).

8. Castor according to one of claims 1 to 6, characterised in that the locking notch (23) is formed in the lower edge of the upper outer cage (9) of the support bearing (8) and the free end of the locking plate (23) carried by the upper lever arm (17a) is situated substantially in the interior of the zone situated flush with the periphery of the upper cage (9) of the support bearing (8).

9. Castor according to claim 1, characterised in that the first limit stop (24) is formed by a transverse rod disposed parallel to the pivot axis (18) of the articulated lever (17) between the flanges (5) of the shell (6) and fixed to the latter and can cooperate with the lower lever arm (17b).
